# EUROPEAN PATENT SPECIFICATION

(11) **EP 2 437 546 B1**
(45) Date of publication and mention of the grant of the patent: **02.03.2016**
(21) Application number: 10306080.2
(22) Date of filing: 04.10.2010
(51) Int. Cl.: H04W 36/14

(54) **Method for controlling communication transfers of mobile equipments between wireless access networks having different access technologies, based on a load- balancing**
Verfahren zur Steuerung von Kommunikationstransferen mobiler Ausrüstungen zwischen drahtlosen Zugangsnetzwerken mit verschiedenen Zugangstechnologien basierend auf einem Lastausgleich
Procédé pour le contrôle de transferts de communication d'équipements mobiles entre des réseaux d'accès sans fil ayant différentes technologies d'accès, en fonction de l'équilibrage de charge

(43) Date of publication of application: 04.04.2012
(73) Proprietor: ALCATEL LUCENT, 92100 Boulogne-Billancourt (FR); INRIA - Institut National de Recherche en Informatique et en Automatique, 78153 Le Chesnay Cedex (FR)
(72) Inventor: ORLANDI, Barbara, 91620, NOZAY (FR); EL MGHAZLI, Yacine, 91620, NOZAY (FR); COUCHENEY, Pierre, 38100, GRENOBLE (FR)
(74) Representative: Cabinet Camus Lebkiri

(56) References cited:
- EP-A1- 1 337 121
- GB-A- 2 414 896
- US-A1- 2008 125 126

## Description

The present invention relates to heterogeneous communication infrastructures comprising at least two wireless access networks having different access technologies.

### BACKGROUND ART

As it is known by a person skilled in the art, a heterogeneous communication infrastructure offers to multi-mode mobile communication equipments (or terminals) the possibility to transfer a communication from one wireless access network to another one (having a different access technology) for different reasons. When such a (multi-mode) mobile (communication) equipment wants to transfer a communication it has established through a first wireless access network, it has first to discover its radio environment ("discovery phase"), then it has to select the best wireless access network to move to ("selection phase"), and finally it has to perform the communication transfer through a handover ("mobility phase"). Patent document GB 2 414 896 A discloses for instance a method for controlling communication transfers of mobile equipments between wireless access networks using load balancing algorithm.

An example is known from GB 2414896.

### SUMMARY

A lot of solutions have been proposed in the standards (notably UMA (Unlicensed Mobile Access), IWLAN (Wireless Local Area Network (WLAN) interworking), 3GPP/non-3GPP IWK (Interworking), ANDSF (Access Network Discovery and Selection Function), IEEE 802.21) to ease mobility in an heterogeneous communication infrastructure.

The best existing solution is the one offered by the IEEE MIH (Media Independent Handover - aka 802.21). This solution allows to prepare a handover in an efficient manner during the discovery and selection phases. In fact, a MIH architecture offers the possibility to verify the resource availability in a candidate target wireless access network by means of the so called MIH_Resource_Query request/response mechanism. However this solution is not optimal from an overall infrastructure point of view that would include all the accesses in a same coverage area. In fact this solution at best allows only to check a local CAC (Connection Admission Control), without taking into account the important issue of the load-balancing on the overall infrastructure of an operator.

So, there is no solution that is able to guarantee to a mobile equipment, that wants to transfer its communication from a first wireless access network (for instance of a cellular type) to a second wireless access network (for instance of a Wi-Fi type), that the latter is adequate and that it will not experience a congestion or interferences in it. It is recalled that a mobile equipment which experiences bad conditions in a wireless access network (especially of the Wi-Fi type) may impair other mobile equipment connections by lowering their bit rates (or throughput) due to its own need for bandwidth.

Moreover, there is no solution designed to launch corrective actions, such as, for instance, migration of a mobile equipment from a congested wireless access network to a non-congested wireless access network, notably if the congested wireless access network is a Wi-Fi network.

So, some embodiments of the invention aim at allowing a control of the access of user mobile equipments to different wireless access networks of a communication infrastructure, which takes into account the infrastructure load-balancing, in order to reach an optimal sharing of the traffic from the overall infrastructure point of view.

An embodiment of the invention consists in a method for controlling communication transfers of mobile equipments between wireless access networks having different access technologies. This method may comprise the steps:
i) when a mobile equipment (having a multi-mode type) could transfer a communication, that has been established through a first wireless access network, to an access equipment of a second wireless access network, of running a load-balancing algorithm with at least a value of a parameter, representative of this communication into the first wireless access network, and at least an estimate of the value that would have this parameter if this communication was established through the access equipment of the second wireless access network, to determine if this communication can be transferred depending on at least one rule, and
ii) of outputting a message representative of the result of this transfer determination.

This method may include additional characteristics considered separately or combined, and notably:
- during step i), if at least one other mobile equipment has already established a communication through the access equipment of the second wireless access network, one may run the load-balancing algorithm with an estimate of the impact on the parameter value of the communication of each other mobile equipment that would induce the communication transfer of the concerned mobile equipment;
- the concerned mobile equipment may provide the current parameter value of its communication. In a variant, one may deduce (or estimate) the parameter value of the communication of the concerned mobile equipment from technical characteristics of the first wireless access network. In another variant, the parameter value of the communication of the concerned mobile equipment may be provided by the wireless access network to which this mobile equipment is connected to the targeted wireless access network to which this mobile equipment could be connected;
- it may comprise a step (iii) consisting in analyzing the evolution of the value of at least one auxiliary parameter representative of the quality of the communication of each mobile equipment having established a communication through the access equipment of the second wireless access network to detect each value deterioration, and in case of detection of value deterioration(s) in determining the mobile equipment which is responsible for them, and then in outputting a message requiring a transfer of the communication of this determined mobile equipment towards another wireless access network;
   ➢ during step (iii) one may run the load-balancing algorithm with at least the current parameter values of the mobile equipments that are connected to the access equipment of the second wireless access network, and at least an estimate of the value that would take this parameter if the communication of the determined mobile equipment was established through another wireless access network, to determine a preferred wireless access network towards which the communication of this determined mobile equipment must be transferred, depending on at least one rule;
      - during step (iii) one may run the load-balancing algorithm with an estimate of the impact on the parameter value of the communication of each other mobile equipment, that has been established through the access equipment of the second wireless access network, that would induce the communication transfer of the concerned mobile equipment;
   ➢ during step (iii) one may output a message that is intended for triggering a handover of the mobile equipment that is concerned by the detection of a value deterioration;
- the parameter may be chosen from a group comprising at least a bit rate, a throughput, a bandwidth, a quality of service, and a required service.

Another embodiment of the invention consists in a control device intended for working for an access equipment of a wireless access network belonging to a communication infrastructure further comprising at least one other wireless access network having an access technology different from the one of the first cited wireless access network. This control device is arranged, when a mobile equipment could transfer a communication, established through the other (or first) wireless access network, to the access equipment:
- for feeding a load-balancing algorithm with at least a value of a parameter, representative of this communication into the other (or first) wireless access network, and at least an estimate of the value that would take this parameter if the communication was established through the (second) wireless access network, in order it determines if this communication can be transferred depending on at least one rule, and
- for outputting a message representative of the result of this transfer determination.

Still another embodiment of the invention consists in an access equipment, intended for being part of a wireless access network belonging to a communication infrastructure, and comprising a control device such as the one above introduced.

The invention is particularly interesting, although not exclusively, in the case where the first wireless access network is a cellular access network and the second wireless access network is a Wi-Fi access network. In this case, each parameter value may be transmitted by means of an IEEE 802.21 signaling protocol message and/or an extended 3GPP OMA-DM (Open Mobile Alliance - Device Management) based ANDSF (Access Network Discovery and Selection Function) signaling protocol message, and/or each outputted message, that is representative of the result of a transfer determination, may be an IEEE 802.21 signaling protocol message or a 3GPP OMA-DM signaling protocol message.

### BRIEF DESCRIPTION OF THE DRAWING

Other features and advantages of the invention will become apparent on examining the detailed specifications hereafter and the appended drawings, wherein:

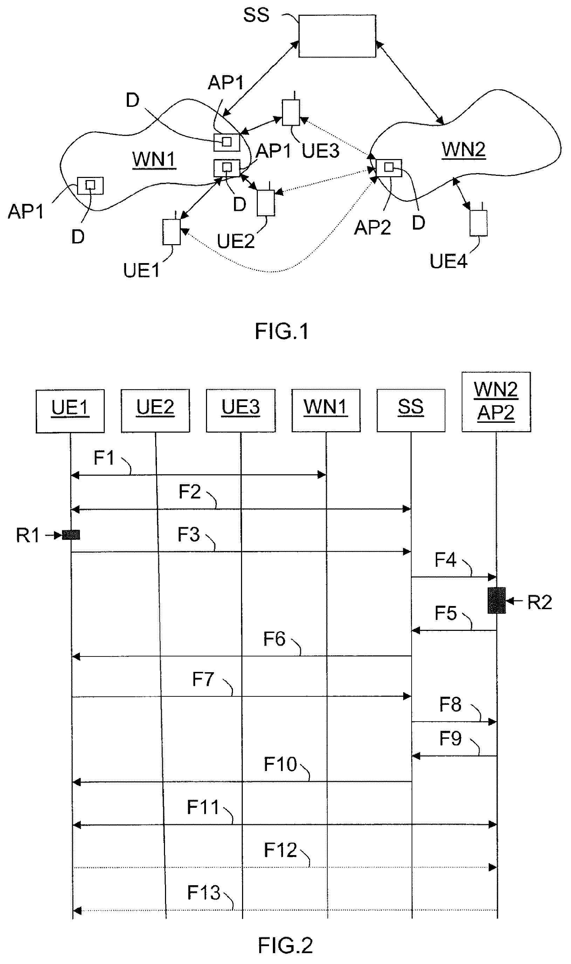

- figure 1 schematically illustrates an example of communication infrastructure comprising two wireless access networks comprising access equipments equipped with a control device according to an embodiment of the invention,
- figure 2 schematically illustrates a first example of sequence of steps allowing a first mobile equipment to connect to a first wireless access network and then to a second wireless access network according to a method embodiment of the invention, in the case where the first mobile equipment and the first and second wireless access networks support the IEEE 802.21 signaling protocol,

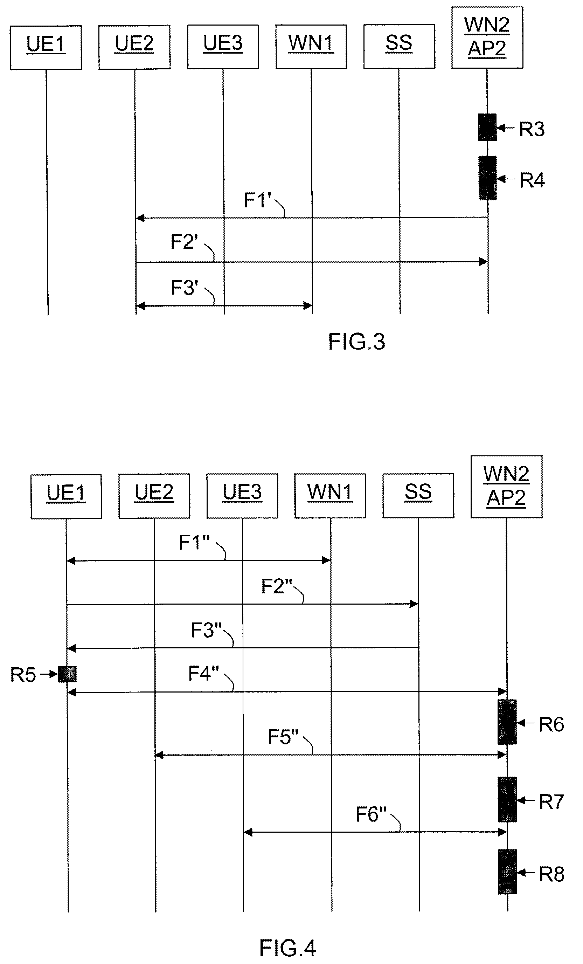

- figure 3 schematically illustrates a second example of sequence of steps allowing a second mobile equipment to transfer its communication from a second wireless access network to a first wireless access network after a congestion detection, according to a method embodiment of the invention, in the case where the second mobile equipment and the first and second wireless access networks support the IEEE 802.21 signaling protocol,
- figure 4 schematically illustrates a third example of sequence of steps allowing a first mobile equipment to connect to a first wireless access network and then to a second wireless access network according to a method embodiment of the invention, and then second and third mobile equipments to connect also to the second wireless access network, in the case where the first, second and third mobile equipments and the first and second wireless access networks support an extension of a 3GPP OMA-DM based ANDSF signaling protocol, and

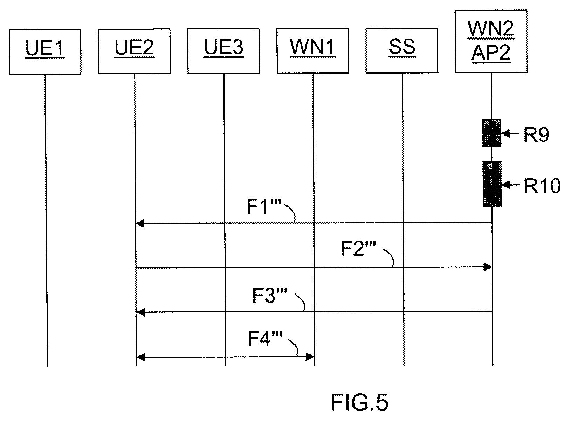

- figure 5 schematically illustrates a fourth example of sequence of steps allowing a second mobile equipment to transfer its communication from a second wireless access network to a first wireless access network after a congestion detection, according to a method embodiment of the invention, in the case where the second mobile equipment and the first and second wireless access networks support an extension of a 3GPP OMA-DM based ANDSF signaling protocol.

The appended drawings may serve not only to complete the invention, but also to contribute to its definition, if need be.

### DETAILED DESCRIPTION

Embodiments of the invention aim at providing a method and associated control device(s) intended for allowing an access control of user mobile equipments (UEi) to different wireless access networks (WNj) of a communication infrastructure.

As illustrated in figure 1, in the following description, it will be considered, as example, that the communication infrastructure comprises two different wireless access networks WNj (j = 1 or 2). But, the communication infrastructure may comprise more than two different wireless access networks, for instance three or four or even more. So the mobile (communication) equipments (or terminals) UEi (here i = 1 to 4, as example) must be of the multi-mode type in order to be able to transfer a communication from one wireless access network WNj to another one WNj' (with j' ≠j).

Moreover, in the following description, it will be considered, as example, that the first wireless access network WN1 is a cellular access network (for instance of the 3G type) and the second wireless access network WN2 is a Wi-Fi access network. But the invention is not limited to this combination of access technologies. Indeed, the invention concerns any combination of access technologies as soon as the latter are all different one from the other.

More, in the following description, it will be considered, as example, that the first and second wireless access networks WNj are coupled together and used by the same operator, for instance a M(V)NO (Mobile (Virtual) Network Operator). But, this is not mandatory. Indeed, the first and second wireless access networks WNj could be coupled together and used by two different operators having a trade agreement.

As illustrated in figure 1 each wireless access network WNj comprises at least one access equipment APj which is an entry point for the mobile equipments UEi. For instance, when a wireless access network WNj is a cellular access network its access equipments APj are base stations (such as Node_Bs), and when a wireless access network WNj is a Wi-Fi access network its access equipments APj are access points.

As mentioned above, an embodiment of the invention consists in a method that is intended for controlling communication transfers of (multi-mode) mobile (communication) equipments UEi between wireless access networks WNj having different access technologies.

Such a method may comprise at least two main steps (i) and (ii).

A first main step (i) is implemented each time a mobile equipment UEi could transfer a communication, that it has established through the first (or second) wireless access network WN1 (or WN2), to an access equipment AP2 (or AP1) of a second (or first) wireless access network WN2 (or WN1). Each time such a situation occurs, one runs (or executes) a load-balancing algorithm with at least a value of a parameter, that is representative of the communication of the concerned mobile equipment UEi into the first (or second) wireless access network WN1 (or WN2), and at least an estimate of the value that would have this parameter if this communication was established through the concerned access equipment AP2 (or AP1) of the second (or first) wireless access network WN2 (or WN1). This execution of the load-balancing algorithm is intended for determining if the concerned communication can be transferred depending on at least one rule.

Herein the term "rule" is to be understood to refer to one or more "conditions" concerning the load-balancing of traffic between the wireless access networks WNj. Each rule is preferably defined by the operator(s) of the communication infrastructure. For instance, a rule (or rules) may define which users go on which wireless access network WNj in order to reach an optimal repartition of the traffic, from the overall infrastructure point of view.

Any load-balancing algorithm known by a person skilled in the art and intended to compute a traffic load-balancing in real time between at least two wireless access network WNj having different access technologies may be used. For instance, one may use the algorithm called "Fair and Efficient User-Network Association Algorithm" that has been developed for multi-technology wireless access networks by INRIA, or else an adapted version of this algorithm.

It is important to note that the parameter that is representative of the communication of a mobile equipment UEi and whose current value feeds the load-balancing algorithm may be either provided by the mobile equipment UEi itself through a message, or deduced (or estimated) from technical characteristics of the wireless access network WNj to which this mobile equipment UEi is connected (this deduction (or estimation) is preferably carried out by the access equipment APj to which a mobile equipment UEi could be connected), or else provided by the wireless access network WNj to which this mobile equipment UEi is connected to the targeted wireless access network WNj' to which this mobile equipment UEi could be connected.

When a message is used by a mobile equipment UEi for transmitting its current parameter value, the type of this message depends on the protocol that is used by the mobile equipment UEi for exchanging signaling information with the wireless access network WNj to which it is connected. For instance, the parameter values may be transmitted by means of an extended version of the IEEE 802.21 signaling protocol message and/or an extended version of a 3GPP OMA-DM based ANDSF signaling protocol message.

One means here by "extended version" a version of a signaling protocol message to which has been added a field for providing the parameter value (for instance the bit rate).

Moreover, the estimated value that feeds the load-balancing algorithm and that would have the parameter if the concerned communication was established through a access equipment APj, of a wireless access network WNj to which a mobile equipment UEi could be connected, is preferably estimated by this access equipment APj.

For instance, the parameter and parameter estimate whose values feed the load-balancing algorithm are bit rates. But, they could be also throughputs, bandwidths, quality of services (or QoSs) or services required by the mobile equipments UEi. In fact, the type of the parameter may depend on the load-balancing algorithm that is used.

It is important to note that during the first main step (i) the load-balancing algorithm may further take into account the other mobile equipments UEi' (with i' ≠ i) that are currently connected to the access equipment APj to which a mobile equipment UEi could be connected. More precisely, if at least one other mobile equipment UEi' has already established a communication through a concerned access equipment APj of a second wireless access network WNj, one may run the load-balancing algorithm not only with at least a parameter value (representative of the communication of the concerned mobile equipment UEi) and at least an estimate of the value that would have the parameter if this communication was transferred, but also with an estimate of the impact on the parameter value of the communication of each other mobile equipment UEi' that would induce the communication transfer of the concerned mobile equipment UEi to this concerned access equipment APj.

This option allows a more optimal computation of the load-balancing and therefore a more precise transfer decision.

A second main step (ii) consists in outputting a message that is representative of the result of the transfer determination that has been carried out during the corresponding and preceding first main step (i).

The type of the outputted messages depends on the protocol that is used for signaling by the wireless access networks WNj and/or the mobile equipments UEi. For instance, each outputted message, that is representative of the result of a transfer determination, may be an IEEE 802.21 signaling protocol message or a 3GPP OMA-DM signaling protocol message.

In the case where the IEEE 802.21 signaling protocol is used, the access equipment APj must be a 802.21 PoA/PoS (Point of Attachment / Point of Service), and the mobile equipments UEi must run a 802.21 client.

Each outputted message may be intended for informing a network equipment or the concerned mobile equipment UEi of the transfer decision (i.e. authorized or rejected), or for triggering the handover of the concerned mobile equipment UEi, or else for providing information defining a preferred wireless access network towards which the communication of the concerned mobile equipment UEi should be transferred (notably in the case where a 3GPP OMA-DM signaling protocol is used).

The first (i) and second (ii) main steps of the method may be implemented, at least partly, by control devices D that are associated to the access equipments APj concerned by the transfer of communication of a mobile equipment UEi. In the non limitative example illustrated in figure 1 each control device D is part of its associated access equipment APj. But this is not mandatory. Indeed, a control device D could be only coupled to its associated access equipment APj. Therefore, a control device D may be made of software modules, at least partly, or of electronic circuit(s) or hardware modules, or else of a combination of hardware and software modules (in this last case it comprises also a software interface allowing interworking between the hardware and software modules). In the case where the control device D is made of software modules it can be stored in a memory of a processor or in any computer software product, such as a CD-ROM, for instance, which can be read by a computer or the like.

Moreover, a control device D may comprise the load-balancing algorithm that is used for determining if a communication can be transferred. But this is not mandatory. Indeed, the load-balancing algorithm may be located (or stored) into an access equipment APj (or in another network equipment, that may work for several access equipments APj in a centralized manner).

In an advantageous embodiment the method may further comprise a third main step (iii) which consists notably in analyzing the evolution of the value of at least one auxiliary parameter which is representative of the quality of the communication of each mobile equipment UEi that has established a communication through an access equipment APj of a wireless access network WNj, in order to detect value deterioration(s).

This auxiliary parameter may be an acknowledgement frame reception delay, an instantaneous bit rate or a modulation type, for instance. But it could also be the one that is used during the first main step (i) (for instance the bit rate).

It is recalled that during a communication the value of at least one auxiliary communication parameter remains generally sensibly constant. So, if there is a deterioration of this auxiliary parameter value, there is a strong probability of congestion (or interferences) of the communication, and therefore a non negligible probability that the communications of other mobile equipment communications are deteriorated.

So, when one has detected value deteriorations that concern the communication of mobile equipments UEi connected to an access equipment APj of a wireless access network WNj, one may determine (during step (iii)) a mobile equipment UEi which is responsible for these value deteriorations, and then one may output a message which requires a transfer of the communication of this determined mobile equipment UEi towards another wireless access network WNj' (here the first one WN1).

In the case where the communication infrastructure comprises at least three wireless access network WNj, one may run (or execute), during step (iii), the load-balancing algorithm with at least the current parameter values of the mobile equipments UEi that are connected to this access equipment APj, and with at least an estimate of the value that would take this parameter if the communication of the concerned mobile equipment UEi was established through another wireless access network WNj' (j' ≠j). This execution of the load-balancing algorithm is intended for determining a preferred wireless access network WNj' towards which the communication of this determined mobile equipment UEi must be transferred, depending on at least one rule.

It is important to note that during the third main step (iii) the load-balancing algorithm may further take into account the other mobile equipments UEi' (with i' ≠ i) that are currently connected to the access equipment APj from which one would like to disconnect the mobile equipment UEi that is subject to an auxiliary parameter value deterioration and which is responsible for auxiliary parameter value deteriorations of mobile equipments UEi' that are connected to the same access equipment APj.

More precisely, if at least one other mobile equipment UEi' is connected to this access equipment APj, one may run the load-balancing algorithm not only with at least the current parameter value of each mobile equipment UEi and with at least an estimate of the value that would take this parameter if the communication of the concerned mobile equipment UEi was established through another wireless access network WNj' (j' ≠j), but also with an estimate of the impact on the parameter value of the communication of each other mobile equipment UEi' that would induce the communication transfer of the concerned mobile equipment UEi to another wireless access network WNj.

It is important to note that during step (iii), when one has detected only one value deterioration that concerns the communication of only one mobile equipment UEi connected to an access equipment APj of a wireless access network WNj, one outputs a message which requires a transfer of the communication of this determined mobile equipment UEi towards another wireless access network WNj' (here the first one WN1).

For instance, the value analysis may be performed by means of an analysis of the time duration (auxiliary parameter) it takes for receiving frame acknowledgments from each mobile equipment UEi into the concerned access equipment APj. These frames may be any frame that is transmitted by an access equipment APj to the mobile equipments UEi connected to it. It could be also a dedicated frame. For instance, one may consider that there is a value deterioration for a communication of a mobile equipment UEi when the time duration that is associated to this mobile equipment UEi has increased by a quantity that is greater than a chosen threshold. This threshold may be a value or a percentage, for instance.

In a variant, the value analysis may be performed by means of an analysis of at least one other auxiliary parameter, such as the instantaneous bit rate of a mobile equipment UEi or the type of modulation that is used for the communication of a mobile equipment UEi (a change of modulation may be significant of the need to compensate for deteriorated radio conditions which can in turn generate a congestion or the like).

During step (iii), once a transfer has been decided, one outputs a message that is representative of the result of this transfer decision. The type of the outputted messages depends on the protocol that is used for signaling by the wireless access networks WNj and/or the mobile equipments UEi. For instance, each outputted message, that is representative of the result of a transfer decision, may be an IEEE 802.21 signaling protocol message or a 3GPP OMA-DM signaling protocol message.

An outputted message may be intended for signaling a preferred wireless access network towards which the communication of the concerned mobile equipment UEi should be transferred (notably in the case where a 3GPP OMA-DM signaling protocol is used), or for triggering the handover of the concerned mobile equipment UEi towards a preferred wireless access network.

The third main step (iii) of the method may be implemented, at least partly, by the control device D that is associated to the access equipment APj from which one would like to disconnect the mobile equipment UEi that is subject to a parameter value deterioration.

One refers now to figure 2 to describe a first example of sequence of steps that may be carried out to allow a first mobile equipment UE1 to connect to the first wireless access network WN1 (here a 3G network) and then to the second wireless access network WN2 (here a Wi-Fi network). In this first example, it will be considered, as example, that the first mobile equipment UE1 and the first WN1 and second WN2 wireless access networks support the IEEE 802.21 signaling protocol. Moreover, this first example of sequence of steps corresponds to a communication transfer that is initiated by the first mobile equipment UE1. But in a variant it could be initiated by the first wireless access network WN1.

In a first step F1 the first mobile equipment UE1 attaches to the 3G network WN1 to establish a communication. Then in a second step F2 the first mobile equipment UE1 registers to a central information server SS (here of the MIH type) and uses the MIIS (Media Independent Information Service) offered by this MIH central information server SS to get the list of the access points AP2 of the Wi-Fi network WN2 that are available in its vicinity. These available access points AP2 may be ordered according to the operator preference(s).

Later on (R1), the first mobile equipment UE1 detects the availability of one access point AP2. So, in a third step F3 the first mobile equipment UE1 sends a message to the MIH central information server SS to inform it that it is a candidate to a transfer of its communication towards a designated access point AP2. This message may be the one called "MIH_MN_HO_Candidate_Query.request" if the first mobile equipment UE1 chooses to use the MIH Mobile-initiated scenario, or in a variant it may be the one called "MIH_Link_Detected.indication" or the one called "MIH-Net_HO_Candidate_Query.response" (following a corresponding request) if the first mobile equipment UE1 chooses to use the Network-initiated scenario. For instance, it comprises the current parameter value of the communication of the first mobile equipment UE1, which means that the standard message needs to comprise an additional field (extension).

In a fourth step F4, when the MIH central information server SS receives this message, it transmits another message to the designated access point AP2 to query for resources adapted to the received current parameter value. This message may be the one called "MIH_N2N_HO_Query_Resources.request". For instance, it comprises the current parameter value of the communication of the first mobile equipment UE1, which means that the standard message needs to comprise an additional field (extension).

Then, the designated access point AP2 (or more precisely its associated control device D) runs (R2) the load-balancing algorithm with the received parameter value of the first mobile equipment UE1 and an estimate of the value that would have this parameter if this communication was established through the designated access point AP2 of the Wi-Fi network WN2, in order to determine if this communication can be transferred depending on at least one rule. Here, one considers that such a transfer is possible. So, in a fifth step F5 the control device D generates a response message to inform the MIH central information server SS that the first mobile equipment UE1 is authorized to transfer its communication to the designated access point AP2. This response message may be the one called "MIH_N2N_HO_Query_Resources.response".

Then, in a sixth step F6 the MIH central information server SS transmits a response message to the first mobile equipment UE1 to inform it that it is authorized to transfer its communication to the designated access point AP2. This message may be the one called "MIH_MN_HO_Candidate_Query.response" or the one called "MIH_Net_HO_Commit.request" (in the latter case the request must be preceded by an "MIH_N2N_Commit procedure between the source and the designated access point AP2).

Then, in a seventh step F7 the first mobile equipment UE1 sends a message to the MIH central information server SS to commit to it the burden of the transfer. This message may be the one called "MIH_MN_HO_Commit.request" or the one called "MIH_Net_HO_Commit.response". In the former case the MIH central information server SS will exchange "MIH_N2N_Commit" messages with the designated access point AP2.

Then, in an eighth step F8, when the MIH central information server SS receives this last message, it transmits another message to the designated access point AP2 to organize the transfer. This message may be the one called "MIH_N2N_HO_Commit.request".

Then, in a ninth step F9 the control device D generates a response message to inform the MIH central information server SS that it is ready for the transfer. This response message may be the one called "MIH_N2N_HO_Commit.response".

It is important to note that, in the case where the first example of sequence of steps has been initiated by the 3G network WN1, but not by the first mobile equipment UE1, the eighth step F8 and ninth step F9 must be performed between the fifth step F5 and the sixth step F6.

Then, in a tenth step F10 the MIH central information server SS transmits a response message to the first mobile equipment UE1 to inform it that the transfer has been organized with the designated access point AP2. This message may be the one called "MIH_MN_HO_Commit.response". It is important to note that, in the case where the first example of sequence of steps has been initiated by the 3G network WN1, but not by the first mobile equipment UE1, the tenth step F10 does not need to be performed.

Then, in an eleventh step F11 the first mobile equipment UE1 attaches to the designated access point AP2 of the Wi-Fi WN2 to transfer its communication.

When this transfer has been fully carried out, the first mobile equipment UE1 may, in a twelfth step F12, transmit a message to its new access point AP2 to check if the transfer has been effectively completed. This message may be the one called "MIH_MN_HO_Complete.request".

Finally, in a thirteenth step F13 the access point AP2 transmits a response message to the first mobile equipment UE1 to inform it that the transfer has been effectively completed. This message may be the one called "MIH_MN_HO_Complete.response".

One refers now to figure 3 to describe a second example of sequence of steps that may be carried out to allow a second mobile equipment UE2 to transfer its communication from an access point AP2 of the Wi-Fi network WN2 to a base station AP1 of the 3G network WN1 after a congestion detection. In this second example, it will be considered, as example, that the first UE1 and third UE3 mobile equipments are connected to the above mentioned access point AP2, and that the first mobile equipment UE1, the 3G network WN1 and the Wi-Fi network WN2 support the IEEE 802.21 signaling protocol.

At a given time (R3) the access point AP2 (or more precisely its associated control device D) detects a value deterioration of the communication of the second mobile equipment UE2 that is connected to it. Therefore, in a first step F1' the access point AP2 (or more precisely its associated control device D) outputs a message which requires a transfer of the communication of the second mobile equipment UEi towards the 3G network WN1. This message may be the one called "MIH_Net_HO_Commit.request". Optionally the last message may be preceded with a first message called "MIH_Net_HO_Candidate_Query.request" and a second message called "MIH_Net_HO_Candidate_Query.response".

If the communication infrastructure comprises at least three wireless access network WNj, the control device D could run (or execute) (R4) the load-balancing algorithm with the parameter values of the first UE1, second UE2 and third UE3 mobile equipments, and with an estimate of the value that would take this parameter if the communication of the second mobile equipment UE2 was established through another wireless access network WNj' (with j' ≠ 2), and possibly with an estimate of the impact on the parameter value of the communication of the first UE1 and third UE3 mobile equipments that would induce the communication transfer of the second mobile equipment UE2 to another wireless access network WNj', in order to determine a preferred wireless access network WNj' towards which the communication of the second mobile equipment UE2 should be transferred, depending on at least one rule. In this case and optionally, one may also have an exchange of query resources towards the third wireless access network (WN3), and one may also add to the response an additional field dedicated to a parameter whose value depends on the result of the load-balancing algorithm run into the control device D associated to the access equipment (AP3) of the third wireless access network (WN3).

Then, in a second step F2' the second mobile equipment UE2 transmits a message response to the control device D of its preceding access point AP2 to inform it that it is now attached to a base station AP1 of the 3G network WN1. This message may be the one called "MIH_Net_HO_Commit.response".

Then, in a third step F3' the second mobile equipment UE2 attaches to a base station AP1 of the 3G network WN1 to transfer its communication.

One refers now to figure 4 to describe a third example of sequence of steps that may be carried out to allow a first mobile equipment UE1 to connect to the first wireless access network WN1 (here a 3G network) and then to the second wireless access network WN2 (here a Wi-Fi network), and then second UE2 and third UE3 mobile equipments to connect to the second wireless access network WN2. In this third example, it will be considered, as example, that the first UE1, second UE2 and third UE3 mobile equipments and the first WN1 and second WN2 wireless access networks support the 3GPP OMA-DM based ANDSF signaling protocol.

In a first step F1" the first mobile equipment UE1 attaches to the 3G network WN1 to establish a communication. Then, in a second step F2" the first mobile equipment UE1 connects to its H-ANDSF (Home-Access Network Discovery and Selection Function) server SS through the 3G network in order to request an access network WNi that is supposed to be the best for it. This can be done by means of a message, such as the one called "ANDSF request".

Then, in a third step F3" the H-ANDSF server SS transmits a response message to the first mobile equipment UE1 to inform it that the preferred wireless access network is the second one WN2. This message may be the one called "ANDSF response".

Later on (R5), the first mobile equipment UE1 detects the availability of one access point AP2 of the Wi-Fi network WN2. So, in a fourth step F4" the first mobile equipment UE1 connects to the available access point AP2 of the Wi-Fi WN2.

Then, the available access point AP2 (or more precisely its associated control device D) runs (R6) the load-balancing algorithm with (an estimate of) the parameter value of the first mobile equipment UE1 in the 3G network and the value that has this parameter through the access point AP2 of the Wi-Fi network WN2, in order to determine if this communication has been transferred to the best wireless access network depending on at least one rule. Here, one considers that such is the case.

Later on, the second mobile equipment UE2 (which is connected to the 3G network WN1) detects the availability of the same access point AP2 of the Wi-Fi network WN2. So, in a fifth step F5" the second mobile equipment UE2 connects to this available access point AP2 of the Wi-Fi network WN2.

Then, the available access point AP2 (or more precisely its associated control device D) runs (R7) the load-balancing algorithm with the parameter value of the second mobile equipment UE2 in the Wi-Fi network WN2, and also preferably with an estimate of the impact on the parameter value of the communication of the first mobile equipment UE1 (in the Wi-Fi network WN2) that is induced by the effective communication transfer of the second mobile equipment UE2 into the Wi-Fi network WN2, in order to determine if this communication has been effectively transferred depending on at least one rule. Here, one considers that such is the case.

Still later on, the third mobile equipment UE3 (which is connected to the 3G network WN1) detects the availability of the same access point AP2 of the Wi-Fi network WN2. So, in a sixth step F6" the third mobile equipment UE3 connects to this available access point AP2 of the Wi-Fi WN2.

Then, the available access point AP2 (or more precisely its associated control device D) runs (R8) the load-balancing algorithm with the parameter value of the third mobile equipment UE3 in the Wi-Fi network WN2, and also preferably with an estimate of the impact on the parameter values of the communications of the first UE1 and second UE2 mobile equipments (in the Wi-Fi network WN2) that is induced by the effective communication transfer of the third mobile equipment UE3 into the Wi-Fi network WN2, in order to determine if this communication has been effectively transferred to the best wireless access network depending on at least one rule. Here, one considers that such is the case.

It is important to note that the running of the load-balancing algorithm (R8) is intended to determine if the communication has been effectively transferred to the best wireless access network. If this is not the case, it is preferable to transmit a new message to the concerned mobile equipment to inform it that it must come back to its preceding wireless access network (here WN1). This new message should preferably contain a field dedicated to a parameter whose value indicates the time delay during which the concerned mobile equipment is not authorized to try again to access to the Wi-Fi network WN2 in order to avoid several successive round trips.

One refers now to figure 5 to describe a fourth example of sequence of steps that may be carried out to allow a second mobile equipment UE2 to transfer its communication from an access point AP2 of the Wi-Fi network WN2 to a base station AP1 of the 3G network WN1 after a congestion detection. In this second example, it will be considered, as example, that the first UE1 and third UE3 mobile equipments are connected to the above mentioned access point AP2, and that the first UE1, second UE2 and third UE3 mobile equipments and the first WN1 and second WN2 wireless access networks support the 3GPP OMA-DM based ANDSF signaling protocol.

At a given time (R9) the access point AP2 (or more precisely its associated control device D) detects a value deterioration of the communication of the second mobile equipment UE2 that is connected to it.

So, in a first step F1"' the control device D may generate a push message to propose to the second mobile equipment UE2 to refer to it to get information defining a proposed transfer of its communication towards another wireless access network WN1. This push message may be the one called "ANDSF Push message".

For instance, this ANDSF push message can be performed by means of the method described in the patent document FR 09 04158 or in the technical specification TS 33.223 (GBA Push).

Then, in a second step F2"' the second mobile equipment UE2 transmits a message to the control device D of its access point AP2 to get information defining the access network WNi that is supposed to be the best for it. This can be done by means of a message, such as the one called "ANDSF request".

It is important to note that in this example the access point AP2 acts as a V-ANDSF (Visited-Access Network Discovery and Selection Function) server.

Then, in a third step F3"' the access point AP2 transmits a response message to the second mobile equipment UE2 to inform it that the preferred wireless access network is the first one WN1, and/or to request for triggering an immediate handover. This message may be the one called "ANDSF response".

To make sure that an immediate handover will occur, the V-ANDSF part of the access point AP2 may use the Rule Enforcement extension that is described in the patent document EP 2010/290069, for instance.

Then, in fourth step F4"' the second mobile equipment UE2 attaches to a base station AP1 of the 3G network WN1 to transfer its communication.

It is important to note that it is also possible to have hybrid solutions when the mobile equipments UEi and the wireless access networks support different signaling protocols.

For instance, the mobile equipments UEi may support only an ANDSF client (OMA-DM) and there is a 802.21 interface between the H-ANDSF server SS and the V-ANDSF servers AP2. In this case, before providing a response to a mobile equipment UEi, the H-ANDSF server SS can perform a 802.21 Resources Query towards the concerned V-ANDSF AP2 as in the example illustrated in figure 2. Depending on the result of this Resources query, the H-ANDSF server SS sends a response setting the Wi-Fi access point AP2 as preferred or not preferred.

In a variant, it is also possible to add some additional node (or leaf) in the ANDSF MO ("Managed Object" - TS 24.312) tree so that a mobile equipment UEi may report the fact that it is able to connect to an access point AP2 and may possibly indicate its current bit rate (parameter value). This allows the central information server SS to direct a 802.21 Resources query to the concerned access point AP2 when the mobile equipment UEi is able to connect to it. Compared to the preceding solution this guarantees up-to-date information on the access point state and this adds a better input for the load-balancing algorithm if the mobile equipment UEi is able to provide its real experienced parameter value in the 3G network WN1 instead of using a parameter value estimated by a server.

The invention allows a mobile operator to offload on a wireless access network (such as a Wi-Fi one, for instance) without getting the risk of inducing a poor customer experience. Indeed, it may guarantee dynamically that an access equipment (for instance an access point) is able to provide adequate service to a mobile equipment or that a mobile equipment will be automatically migrated to another wireless access network (such as a cellular one, for instance) if a given service can not be provided. So, the invention allows to perform load-balancing between heterogeneous wireless access networks that are coupled therebetween, with the ability to detect in a wireless access network (such as a Wi-Fi one, for instance) when a mobile equipment is starting to have issues and to move it to another wireless access network (such as a cellular one, for instance) before it affects negatively other mobile equipments that are connected to the same access point.

The invention is not limited to the embodiments of method, control device and access equipment described above, only as examples, but it encompasses all alternative embodiments which may be considered by one skilled in the art within the scope of the claims hereafter.

## Claims

1. Method for controlling communication transfers of mobile equipments (UEi) between wireless access networks (WNj) having different access technologies, comprising the steps:
i) when a communication established by a mobile equipment (UEi) through a first wireless access network (WN1) is candidate to be transferred by the mobile equipment (UEi) to an access equipment (AP2) of a second wireless access network (WN2),
• running a load-balancing algorithm with at least a value of a parameter, representative of said communication into said first wireless access network (WN1), and at least an estimate of the value of said parameter if said communication was established through said access equipment (AP2) of said second wireless access network (WN2), at least one other mobile equipment (UEi') having already established an other communication through said access equipment (AP2) of said second wireless access network (WN2), to determine if said communication can be transferred depending on at least one rule,
• running the load-balancing algorithm with an estimate of the impact of a parameter value representative of said other communication of the at least one other mobile equipment (UEi') into said second wireless access network (WN2), if the communication of the mobile equipment (UEi) established through the first wireless access network (WN1) is transferred to said second wireless access network (WN2), and,
ii) outputting a message representative of the result of said transfer determination.

2. Method according to claim 1, wherein said mobile equipment (UEi) provides the current parameter value of its communications.

3. Method according to claim 1, wherein said parameter value of the communication of said mobile equipment (UEi) is deduced from technical characteristics of said first wireless access network (WN1).

4. Method according to claim 1, wherein said parameter value of the communication of the concerned mobile equipment (UEi) is provided by said first wireless access network (WN1) to which the mobile equipment (UEi) is connected to the second wireless access network (WN2) to which the mobile equipment (UEi) could be connected.

5. Method according to any one of claims 1 to 4, wherein it comprises a step (iii) consisting in analyzing the evolution of the value of at least one auxiliary parameter representative of the quality of the communication of each mobile equipment (UEi) having established a communication through said access equipment (AP2) of said second wireless access network (WN2) to detect each value deterioration, and in case of detection of value deteriorations in determining a mobile equipment (UEi) which is responsible for them, and then in outputting a message requiring a transfer of the communication of this determined mobile equipment (UEi) towards another wireless access network (WN1).

6. Method according to claim 5, wherein during step (iii) one runs said load-balancing algorithm with at least the current parameter values of said mobile equipments (UEi) that are connected to said access equipment (AP2) of said second wireless access network (WN2), and at least an estimate of the value of said parameter if the communication of the concerned mobile equipment (UEi) was established through another wireless access network (WN1), to determine a preferred wireless access network (WN1) towards which the communication of this determined mobile equipment (UEi) must be transferred, depending on at least one rule.

7. Method according to claim 6, wherein during step (iii) one runs said load-balancing algorithm with an estimate of the impact on the parameter value of the other communication of the at least one other mobile equipment (UEi'), established through said access equipment (AP2) of said second wireless access network (WN2), if the communication of mobile equipment (UEi) is transferred to said second wireless access network (WN2).

8. Method according to any one of claims 1 to 7, wherein said parameter is chosen from a group comprising at least a bit rate, a throughput, a bandwidth, a quality of service, and a required service.

9. Method according to any one of claims 1 to 8, wherein said first wireless access network (WN1) is a cellular access network and said second wireless access network (WN2) is a Wi-Fi access network.

10. Method according to claim 9, wherein each parameter value is transmitted by means of an IEEE 802.21 signaling protocol message and/or an extended 3GPP OMA-DM based ANDSF signaling protocol message.

11. Method according to any one of claims 9 and 10, wherein each outputted message, representative of the result of a transfer determination, is an IEEE 802.21 signaling protocol message or a 3GPP OMA-DM signaling protocol message.

## Patentansprüche

1. Verfahren zur Steuerung von Kommunikationsübertragungen von mobilen Geräten (UEi) zwischen drahtlosen Zugangsnetzwerken (WNi) mit unterschiedlichen Zugangstechnologien, umfassend die Stufen:
i) Wenn eine durch ein mobiles Gerät (UEi) hergestellte Kommunikation durch ein erstes drahtloses Zugangsnetzwerk (WN1) durch das mobile Gerät (UEi) auf ein Zugangsgerät (AP2) eines zweiten drahtlosen Zugangsnetzwerks (WN2) übertragen werden soll,
• Betreiben eines lastausgleichenden Algorithmus mit wenigstens einem Wert eines Parameters, der für die genannte Kommunikation in dem genannten ersten drahtlosen Zugangsnetzwerk (WN1) repräsentativ ist, und wenigstens eine Einschätzung des Wertes des genannten Parameters, wenn die genannte Kommunikation durch die genannte Zugangsausrüstung (AP2) des genannten zweiten drahtlosen Zugangsnetzwerks (WN2) hergestellt wurde, wenigstens ein anderes mobiles Gerät (UEi'), das bereits eine andere Kommunikation durch das genannte Zugangsgerät (AP2) des genannten zweiten drahtlosen Zugangsnetzwerks (WN2) hergestellt hat, um zu bestimmen, ob die genannte Kommunikation in Abhängigkeit von wenigstens einer Regel übertragen werden kann,
• Betreiben des lastausgleichenden Algorithmus mit einer Einschätzung der Auswirkung eines Parameterwertes, der für die genannte andere Kommunikation der wenigstens einen anderen mobilen Ausrüstung (UEi') in das genannte zweite drahtlose Zugangsnetzwerk (WN2) repräsentativ ist, wenn die Kommunikation des mobilen Geräts (UEi), das durch das erste drahtlose Zugangsnetzwerk (WN1) hergestellt ist, auf das genannte zweite drahtlose Zugangsnetzwerk (WN2) übertragen wird und
ii) Ausgabe einer Meldung, die für das Ergebnis der genannten Übertragungsbestimmung repräsentativ ist.

2. Verfahren gemäß Anspruch 1, bei dem das genannte mobile Gerät (UEi) den Stromparameterwert seiner Kommunikation bereitstellt.

3. Verfahren gemäß Anspruch 1, bei dem der genannte Parameterwert der Kommunikation des genannten mobilen Geräts (UEi) von technischen Merkmalen des genannten ersten drahtlosen Zugangsnetzwerks (WN1) abgeleitet ist.

4. Verfahren gemäß Anspruch 1, bei dem der genannte Parameterwert der Kommunikation des betroffenen mobilen Geräts (UEi) durch das genannte erste drahtlose Zugangsnetzwerk (WN1) bereitgestellt ist, an das die mobile Ausrüstung (UEi) an das zweite drahtlose Zugangsnetzwerk (WN2) angeschlossen ist, an das das mobile Gerät (UEi) angeschlossen sein könnte.

5. Verfahren gemäß Anspruch 1 bis 4, bei dem es eine Stufe (iii) umfasst, die in der Analyse der Entwicklung des Wertes von wenigstens einem Hilfsparameter besteht, der für die Qualität der Kommunikation von jedem mobilen Gerät (UEi) repräsentativ ist, das eine Kommunikation durch das genannte Zugangsgerät (AP2) des genannten zweiten drahtlosen Zugangsnetzwerks (WN2) hergestellt hat, um jede Wertverschlechterung zu erfassen, und für den Fall der Erfassung von Wertverschlechterungen in der Bestimmung eines mobilen Geräts (UEi), das dafür verantwortlich ist, und dann Ausgabe einer Meldung, die eine Übertragung der Kommunikation von diesem bestimmten mobilen Gerät (UEi) auf ein anderes drahtloses Zugangsnetzwerk (WN1) anfordert.

6. Verfahren gemäß Anspruch 5, bei dem während der Stufe (iii) der genannte lastausgleichende Algorithmus mit wenigstens den Stromparameterwerten der genannten mobilen Geräte (UEi) betrieben wird, die an das genannte Zugangsgerät (AP2) des genannten zweiten drahtlosen Zugangsnetzwerks (WN2) angeschlossen sind, und wenigstens eine Einschätzung des Wertes des genannten Parameters, wenn die Kommunikation des betroffenen mobilen Geräts (UEi) durch ein anderes drahtloses Zugangsnetzwerk (WN1) hergestellt ist, um ein bevorzugtes drahtloses Zugangsnetzwerk (WN1) zu bestimmen, auf das die Kommunikation dieses bestimmten mobilen Geräts (UEi) in Abhängigkeit von wenigstens einer Regel übertragen werden muss.

7. Verfahren gemäß Anspruch 6, bei dem während der Stufe (iii) der genannte lastausgleichende Algorithmus mit einer Einschätzung der Auswirkungen auf den Parameterwert der anderen Kommunikation des wenigstens einen mobilen Geräts (UEi') betrieben wird, die durch das genannte Zugangsgerät (AP2) des genannten zweiten drahtlosen Zugangsnetzwerks (WN2) hergestellt ist, wenn die Kommunikation des mobilen Geräts (UEi) auf das genannte zweite drahtlose Zugangsnetzwerk (WN2) übertragen wird.

8. Verfahren gemäß Anspruch 1 bis 7, bei dem der genannte Parameter aus einer Gruppe ausgewählt ist, umfassend wenigstens eine Bitrate, einen Durchsatz, eine Bandbreite, eine Servicequalität und einen erforderlichen Service.

9. Verfahren gemäß Anspruch 1 bis 8, bei dem das genannte erste drahtlose Netzwerk (WN1) ein Zellzugangsnetzwerk ist und das genannte zweite drahtlose Zugangsnetzwerk (WN2) ein Wi-Fi-Zugangsnetzwerk ist.

10. Verfahren gemäß Anspruch 9, bei dem jeder Parameterwert anhand eines Mittels einer IEEE 802.21- Signalprotokollmeldung und / oder einer erweiterten 3GPP OMA-DM-basierten ANDSF-Signalprotokollmeldung übertragen wird.

11. Verfahren gemäß Anspruch 9 und 10, bei dem jede ausgegebene Meldung, die für das Ergebnis einer Übertragungsbestimmung repräsentativ ist, eine IEEE 802.21-Signalgebungsprotokollmeldung oder eine 3GPP OMA-DM-Signalgebungsprotokollmeldung ist.

## Revendications

1. Procédé de commande de transferts de communication d'équipements mobiles (UEi) entre des réseaux d'accès sans fil (WNj) ayant des technologies d'accès différentes, comprenant les étapes consistant à :
i) quand une communication établie par un équipement mobile (UEi) par le biais d'un premier réseau d'accès sans fil (WN1) est candidate pour être transférée par l'équipement mobile (UEi) à un équipement d'accès (AP2) d'un second réseau d'accès sans fil (WN2),
• exécuter un algorithme d'équilibrage de charge avec au moins une valeur d'un paramètre, représentatif de ladite communication dans ledit premier réseau d'accès sans fil (WN1), et au moins une estimation de la valeur dudit paramètre si ladite communication a été établie par le biais dudit équipement d'accès (AP2) dudit second réseau d'accès sans fil (WN2), au moins un autre équipement mobile (UEi') ayant déjà établi une autre communication par le biais dudit équipement d'accès (AP2) dudit second réseau d'accès sans fil (WN2), afin de déterminer si ladite communication peut être transférée en fonction d'au moins une règle,
• exécuter l'algorithme d'équilibrage de charge avec une estimation de l'impact d'une valeur de paramètre représentative de ladite autre communication de l'au moins un autre équipement mobile (UEi') dans ledit second réseau d'accès sans fil (WN2), si la communication de l'équipement mobile (UEi) établie par le biais du premier réseau d'accès sans fil (WN1) est transférée audit second réseau d'accès sans fil (WN2), et,
ii) sortir un message représentatif du résultat de ladite détermination de transfert.

2. Procédé selon la revendication 1, dans lequel ledit équipement mobile (UEi) fournit la valeur de paramètre actuelle de sa communication.

3. Procédé selon la revendication 1, dans lequel ladite valeur de paramètre de la communication dudit équipement mobile (UEi) est déduite à partir des caractéristiques techniques dudit premier réseau d'accès sans fil (WN1).

4. Procédé selon la revendication 1, dans lequel ladite valeur de paramètre de la communication de l'équipement mobile (UEi) concerné est fournie par ledit premier réseau d'accès sans fil (WN1) auquel est connecté l'équipement mobile (UEi) au second réseau d'accès sans fil (WN2) auquel l'équipement mobile (UEi) pourrait être connecté.

5. Procédé selon l'une quelconque des revendications 1 à 4, dans lequel il comprend une étape (iii) consistant à analyser l'évolution de la valeur d'au moins un paramètre auxiliaire représentatif de la qualité de la communication de chaque équipement mobile (UEi) ayant établi une communication par le biais dudit équipement d'accès (AP2) dudit second réseau d'accès sans fil (WN2) afin de détecter chaque détérioration de valeur, et en cas de détection de détériorations de valeur, à déterminer un équipement mobile (UEi) qui est responsable d'elles, puis à délivrer en sortie un message demandant un transfert de la communication de cet équipement mobile (UEi) déterminé vers un autre réseau d'accès sans fil (WN1).

6. Procédé selon la revendication 5, dans lequel, à l'étape (iii), on exécute ledit algorithme d'équilibrage de charge avec au moins les valeurs de paramètre actuelles desdits équipements mobiles (UEi) qui sont connectés audit équipement d'accès (AP2) dudit second réseau d'accès sans fil (WN2), et au moins une estimation de la valeur dudit paramètre si la communication de l'équipement mobile (UEi) concerné a été établie par le biais d'un autre réseau d'accès sans fil (WN1), pour déterminer un réseau d'accès sans fil (WN1) préféré vers lequel la communication de cet équipement mobile (UEi) déterminé doit être transférée, en fonction d'au moins une règle.

7. Procédé selon la revendication 6, dans lequel, à l'étape (iii), on exécute ledit algorithme d'équilibrage de charge avec au moins une estimation de de l'impact sur la valeur de paramètre de l'autre communication de l'au moins un autre équipement mobile (UEi'), établie par le biais dudit équipement d'accès (AP2) dudit second réseau d'accès sans fil (WN2), si la communication d'équipement mobile (UEi) est transférée audit second réseau d'accès sans fil (WN2).

8. Procédé selon l'une quelconque des revendications 1 à 7, dans lequel ledit paramètre est choisi dans un groupe comprenant au moins un débit binaire, un débit, une bande passante, une qualité de service et un service requis.

9. Procédé selon l'une quelconque des revendications 1 à 8, dans lequel ledit premier réseau d'accès sans fil (WN1) est un réseau d'accès cellulaire et ledit second réseau d'accès sans fil (WN2) est un réseau d'accès Wi-Fi.

10. Procédé selon la revendication 9, dans lequel chaque valeur de paramètre est un transmise au moyen d'un message de protocole de signalisation IEEE 802.21 et/ou d'un message de protocole de signalisation ANDSF basé sur 3GPPP OMA-DM étendu.

11. Procédé selon l'une quelconque des revendications 9 et 10, dans lequel chaque message sorti, représentatif du résultat d'une détermination de transfert, est un message de protocole de signalisation IEEE 802.21 ou un message de protocole de signalisation 3GPPP OMA-DM.
